# EUROPEAN PATENT APPLICATION

(11) **EP 4 752 738 A1**
(43) Date of publication of application: **03.06.2026**
(21) Application number: 25166778.8
(22) Date of filing: 27.03.2025
(51) Int. Cl.: G06F 13/16, G06F 9/50, G06F 13/40

(54) **METHOD AND APPARATUS FOR ALLOCATING MEMORY RESOURCES**

(30) Priority: 28.11.2024 CN 202411741006
(71) Applicant: New H3C Information Technologies Co., Ltd., Hangzhou, Zhejiang 310056 (CN)
(72) Inventor: YU, Yinting, 100102, Beijing (CN)
(74) Representative: 2SPL Patentanwälte PartG mbB

(57) **Abstract**

According to a method for allocating memory resources, a CXL network manager receives a memory usage request carrying a memory usage time and a memory resource demand and sent by a first host; the memory usage time referring to a time period during which the first host requests to use the memory resources in a CXL memory pool; the memory resource demand referring to an amount of the memory resources that the first host demands to use. If the memory usage time is not currently being occupied or not scheduled by other hosts, and available memory resources in the CXL memory pool meet the memory resource demand, then the memory resources in the CXL memory pool are allocated to the first host during the memory usage time, so that all the allocated memory resources in the CXL memory pool are available to the first host within the memory usage time.

## Description

### TECHNICAL FIELD

The present disclosure relates to the field of computer technology, particularly to a method and an apparatus for allocating memory resources, an electronic device, and a storage medium.

### BACKGROUND

Compute express link (CXL) is an interconnect technology designed for memory expansion, heterogeneous computing, and system resource disaggregation. Utilizing CXL enables efficient resource sharing and pooling. Nowadays, fabric management (FM) divides memory resources in a CXL resource pool into several parts, and allocates a portion of memory resources to each host for use.

However, in recent years, with the development of high-performance computing, there has been increasing requirements of large amounts of memory and discontinuous tasks. If memory resources are still allocated in the aforementioned manner, insufficient memory resource blocks allocated to each host may not support the memory demands of these tasks. Besides, since the tasks are discontinuous, the allocated memory resources remain vacant if the host is not executing tasks, resulting in a waste of memory resources.

Therefore, there is an urgent need for a method of allocating memory resources to address the issues of insufficient memory resource allocation and wasted idle resources in scenarios with large memory demands and discontinuous operations.

### SUMMARY

In view of this, the present disclosure provides a method and an apparatus for allocating in-board memory resources, an electronic device and a storage medium.

The present disclosure provides a method for allocating memory resources, which is applied to a Compute Express Link (CXL) network manager. The method includes:
receiving a memory usage request sent by a first host, wherein the memory usage request carries a memory usage time and a memory resource demand; the memory usage time referring to a time period during which the first host requests to use the memory resources in a CXL memory pool; the memory resource demand referring to an amount of the memory resources that the first host demands to use;
in response to determining that the memory usage time is not currently being occupied or is not scheduled by other hosts, and available memory resources in the CXL memory pool meet the memory resource demand, then allocating the memory resources in the CXL memory pool to the first host during the memory usage time, so that all the memory resources in the CXL memory pool are available to the first host within the memory usage time.

The present disclosure further provides an apparatus for allocating memory resources, which is applied to a compute express link (CXL) network manager. The apparatus includes:
a receiving module, to receive a memory usage request sent by a first host, where the memory usage request carries a memory usage time and a memory resource demand; the memory usage time referring to a time period during which the first host requests to use the memory resources in a CXL memory pool; the memory resource demand referring to an amount of the memory resources that the first host demands to use;
an allocation module, to, in response to determining that the memory usage time is not being occupied or is not scheduled by other hosts, and available memory resources in the CXL memory pool meet the memory resource demand, allocate the memory resources in the CXL memory pool to the first host during the memory usage time, so that all the memory resources in the CXL memory pool are available to the first host within the memory usage time.

The present disclosure further provides an electronic device, including: a processor and a computer-readable storage medium for storing computer program instructions, wherein the computer program instructions are executed by the processor to implement the above method.

The present disclosure further provides a machine-readable storage medium for storing computer program instructions, wherein the computer program instructions are executed by a processor to implement the above method.

From the above technical solutions, in this example, a memory usage request sent by a first host is received, wherein the memory usage request carries a memory usage time and a memory resource demand. In response to determining that the memory usage time is not being occupied or is not scheduled by other hosts, and available memory resources in the CXL memory pool meet the memory resource demand, then the memory resources in the CXL memory pool are allocated to the first host during the memory usage time, so that all the memory resources in the CXL memory pool are available to the first host within the memory usage time. In this way, the first host occupies all memory resources in the CXL memory pool during the memory usage time. Compared with the related art where part of the memory resources in the CXL memory pool may be occupied, this example may provide sufficient memory resources in most scenarios, solving the problem of insufficient memory resource allocation.

Furthermore, in this example, different hosts may occupy all memory resources in the CXL memory pool during different memory usage times, which maximizes the utilization of memory resources in the CXL memory pool, thereby reducing waste caused by unused memory resources.

### BRIEF DESCRIPTION OF DRAWINGS

FIG. 1 is a schematic diagram of a CXL memory system provided by an example of the present disclosure.
FIG. 2 is a schematic diagram of a method provided by an example of the present disclosure.
FIG. 3 is a schematic diagram of allocating memory resources provided by an example of the present disclosure.
FIG. 4 is a schematic diagram of constructing a virtual machine provided by an example of the present disclosure.
FIG. 5 is a schematic diagram of a time distribution for a host to use or scheduled to use memory resources provided by an example of the present disclosure.
FIG. 6 is a schematic diagram of a method provided by an example of the present disclosure.
FIG. 7 is a schematic structural diagram of an apparatus provided by an example of the present disclosure.
FIG. 8 is a schematic structural diagram of an electronic device provided by an example of the present disclosure.

### DETAILED DESCRIPTION

In order to enable those skilled in the art to better understand the technical solutions provided by the examples of the present disclosure, and to make the aforementioned objectives, features, and advantages of the examples of the present disclosure more apparent and easier to understand, the technical solutions in the examples of the present disclosure are further described in detail below in conjunction with the accompanying drawings.

To facilitate understanding of the method, before describing the method, an introduction to the CXL memory system architecture involved in the examples of the present disclosure is provided.

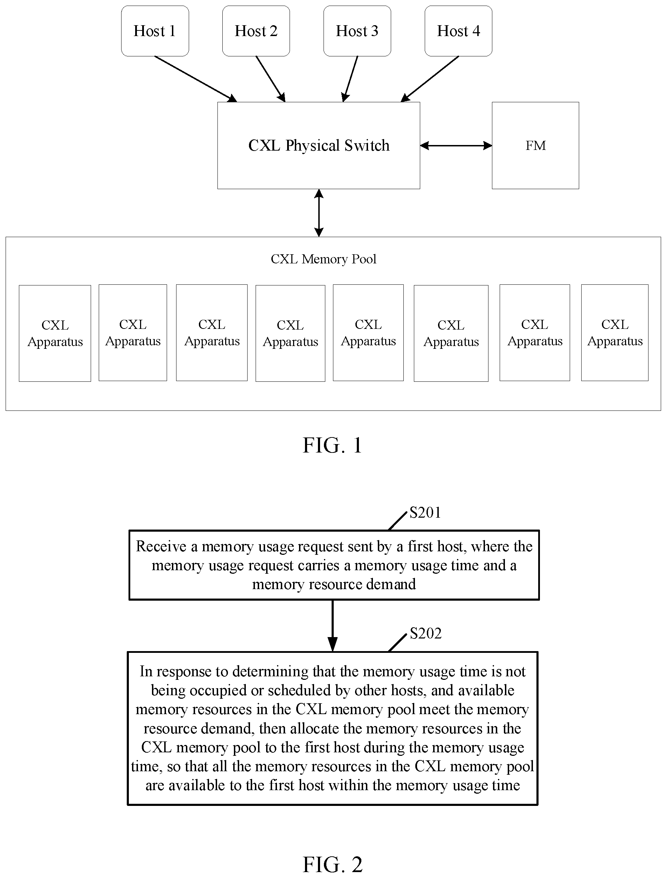

Please refer to FIG. 1, which is a schematic diagram of a CXL memory system provided by the present disclosure. As shown in FIG. 1, the system includes hosts, a CXL physical switch, a CXL memory pool, and a CXL fabric manager (FM). The CXL memory pool includes multiple memory apparatuses, hereinafter referred to as CXL apparatuses, that provide memory resources. The FM allocates memory resources from the CXL memory pool to each first host by executing the methods described in the following examples. The memory apparatuses may refer to CXL memory servers, such as servers with 1TB of memory. A plurality of CXL memory servers may build a CXL memory pool. Besides, the memory apparatuses are not limited to memory servers and may also be any form of apparatus providing high-speed volatile or nonvolatile memory, such as Optane.

Below, the method provided by the examples of the present disclosure is described in conjunction with the system architecture shown in FIG. 1.

Please refer to FIG. 2, which is a schematic diagram of the method provided by an example of the present disclosure. As shown in FIG. 2, the process may include the following blocks.

Block S201: a memory usage request sent by a first host is received, where the memory usage request carries a memory usage time and a memory resource demand.

In this example, the memory usage time in the memory usage request sent by any host refers to a time period during which the host requests to use the memory resources in the CXL memory pool. The memory resource demand in the memory usage request sent by any host refers to an amount of memory resources required by the host.

In this example, the memory resources in the CXL memory pool may be divided in advance based on time slices, for example, the 24 hours of each day may be divided into 2-hour, 3-hour, or 4-hour intervals, thereby obtaining multiple time slices. When a memory usage request from a user is sent by using a first host, the memory usage time may be determined based on the first host's business characteristics and the time slices. For example, with the 24 hours from 0:00 to 24:00 being divided into two-hour time slices, in response to determining Host A's business characteristics indicate a peak period from 8:00 to 10:00 each day, then the memory usage request sent by Host A will carry a memory usage time of 8:00 to 10:00.

It should be noted that the division of time slices is based on specific conditions and is not limited in the examples of the present disclosure.

Block S202: in response to determining that the memory usage time is not occupied or scheduled by other hosts, and available memory resources in the CXL memory pool meet the memory resource demand, then the memory resources in the CXL memory pool are allocated to the first host during the memory usage time, so that all the memory resources in the CXL memory pool are available to the first host within the memory usage time.

In this example, in response to determining that the memory usage time is occupied or scheduled by other hosts, a first indication is sent to the first host, where the first indication indicates that the memory usage request sent by the first host is rejected. In response to determining that the memory usage time is not occupied or scheduled by other hosts, but the available memory resources in the CXL memory pool are not able to meet the memory resource demand, also, a first indication is sent to the first host, where the first indication indicates that the memory usage request sent by the first host is rejected.

In this example, in response to determining that the memory usage time is not occupied or scheduled by other hosts, and the available memory resources in the CXL memory pool are able to meet the memory resource demand, that is, the memory usage request is accepted by the FM. For ease of description, the aforementioned situation will be described as the memory usage request being accepted by the FM below.

In this example, from the start of running the CXL memory system, the memory usage time in each memory usage request that is not rejected will be recorded in a designated storage area in the FM. Therefore, when a memory usage request sent by any host is received, it is checked whether the memory usage time carried in the received memory usage request has existed in the memory usage requests recorded locally to determine whether the memory usage time carried in the received memory usage request is being occupied or scheduled by other hosts. Here, the memory usage time being occupied by other hosts may refer to that the current time point is within the memory usage time, and there are other hosts which are currently using the memory resources of the CXL memory pool during the memory usage time. The memory usage time being scheduled by other hosts refers to that the current time point is beyond the memory usage time, and there are other hosts having already scheduled the memory resources of the CXL memory pool during the memory usage time.

As an example, after determining that the memory usage time is not being occupied or scheduled by other hosts and the available memory resources in the CXL memory pool may meet the memory resource demand, the method further includes: recording the memory usage time locally. This example achieves recording the memory usage time in the memory usage request accepted by the FM (recording the memory usage time also achieves reserving the memory usage time), so that the FM may determine whether the memory usage time carried in subsequent memory usage requests is being occupied or is scheduled based on the memory usage times recorded locally.

In this example, the available memory resources in the CXL memory pool may be the unoccupied memory resources of all memory apparatuses in the CXL memory pool. That is, the memory resources in the CXL memory pool are limited to being occupied or scheduled by one host during one memory usage time. It should be noted that, except for extreme-large tasks with huge memory demands, the amount of memory resources of all memory apparatuses in the CXL memory pool is greater than or equal to the memory resource demand of the first host.

In this example, the process of allocating memory resources from the CXL memory pool to the first host at the start time of the memory usage time in block S202 will be described later in the form of specific examples, and will not be repeated here.

At this point, the process shown in FIG. 1 is completed.

As illustrated by the process in FIG. 1, in this example, a memory usage request sent by a first host is received, wherein the memory usage request carries a memory usage time and a memory resource demand. In response to determining that the memory usage time is not being occupied or is scheduled by other hosts, and the available memory resources in the CXL memory pool may meet the memory resource demand, memory resources in the CXL memory pool are allocated to the first host at the starting time point of the memory usage time, enabling the first host to utilize all memory resources in the CXL memory pool during the memory usage time. In this way, the first host exclusively occupies all memory resources in the CXL memory pool during the memory usage time. Compared with related art where part of the memory resources in the CXL memory pool may be occupied, this approach may provide sufficient memory resources in most scenarios, solving the problem of insufficient memory resource allocation.

Furthermore, in this example, different hosts may exclusively occupy all memory resources in the CXL memory pool during different memory usage times, which maximizes the utilization of memory resources in the CXL memory pool, thereby reducing waste caused by unoccupied memory resources.

It should be noted that the above method is applicable to more than host task scenarios with large memory demands and clear fixed task times, such as experimental simulations in scientific research (e.g., physics, chemistry simulations), medical imaging, large-scale data analysis, and other scenarios that typically require huge memory.

Below is a detailed elaboration on allocating memory resources in the CXL memory pool to the first host at the starting time point of the memory usage time:

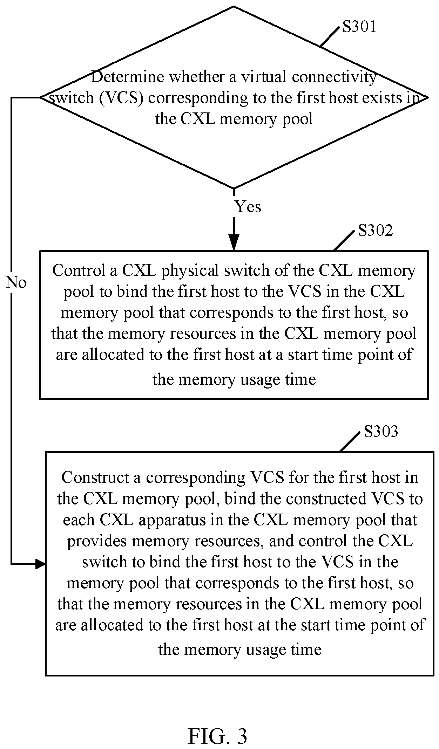

Refer to FIG. 3, which is a schematic diagram of allocating memory resources provided in an example of the present disclosure.

As shown in FIG. 3, the process may include the following blocks.

Block S301: it is determined whether a virtual connectivity switch (VCS) corresponding to the first host exists in the CXL memory pool.

In response to determining the VCS exists in the CXL memory pool, then the process proceeds to the following Block S302; in response to determining no VCS in the CXL memory pool corresponding to the first host, then the process proceeds to the following Block S303.

Block S302: a CXL physical switch of the CXL memory pool is controlled to bind the first host to the VCS in the CXL memory pool that corresponds to the first host, so that the memory resources in the CXL memory pool are allocated to the first host at a start time point of the memory usage time.

Block S303: a corresponding VCS is constructed for the first host in the CXL memory pool, the constructed VCS is bound to each CXL apparatus in the CXL memory pool that provides memory resources, and the CXL physical switch is controlled to bind the first host to the VCS in the CXL memory pool that corresponds to the first host, so that the memory resources in the CXL memory pool are allocated to the first host at the start time point of the memory usage time.

In this example, if there exists a VCS corresponding to the first host in the CXL memory pool (for example, after the memory usage request of the first host is accepted but not for the first time), the CXL physical switch of the CXL memory pool is controlled to bind the first VCS with the first host, so that the first host may exclusively occupy all memory resources in the CXL memory pool during the memory usage time.

In this example, only if there is no VCS corresponding to the first host in the CXL memory pool (for example, after the memory usage request of the first host is accepted for the first time), a corresponding VCS is constructed for the first host in the CXL memory pool, and then the VCS is bound with each memory apparatus in the CXL memory pool to realize the binding between the VCS and memory resources in the CXL memory pool. For example, after memory usage requests from four hosts are accepted by the fabric manager (FM), it is found that there are no corresponding VCSs in the CXL memory pool, so four VCSs are established to correspond to these four hosts respectively.

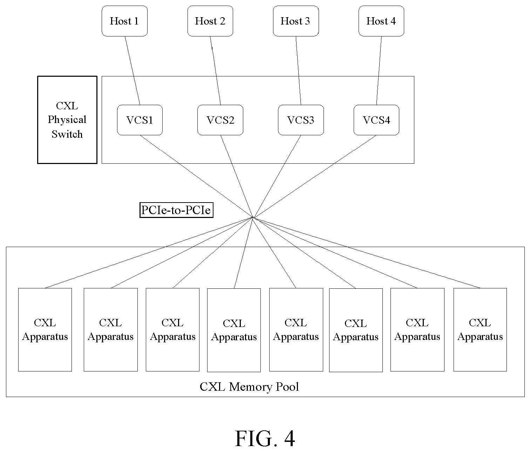

Specifically, FIG. 4 is a schematic diagram of constructing a virtual machine provided in an example of the present disclosure. Referring to FIG. 4, the VCS configures virtual PCIe-to-PCIe bridges and connects them to the physical PCIe-to-PCIe bridges of each CXL apparatus in the CXL memory pool that provides memory resources, to realize the binding between the VCS and each CXL apparatus in the CXL memory pool. This enables complete isolation between the first host and other hosts.

It should be noted that in response to determining a second host, which has scheduled a next memory usage time after the memory usage time allocated to a first host, has a corresponding VCS in the CXL memory pool, then the FM may directly control the CXL physical switch to unbind the first host from its corresponding first VCS and bind the second host with its corresponding second VCS at the end of the memory usage time allocated to the first host, so that the second host may exclusively occupy all memory resources in the CXL memory pool during its memory usage time. That is, the FM manages the allocation of memory resources in the CXL memory pool by binding and unbinding hosts with their corresponding VCSs, enabling multiple hosts to alternately use memory resources in the CXL memory pool.

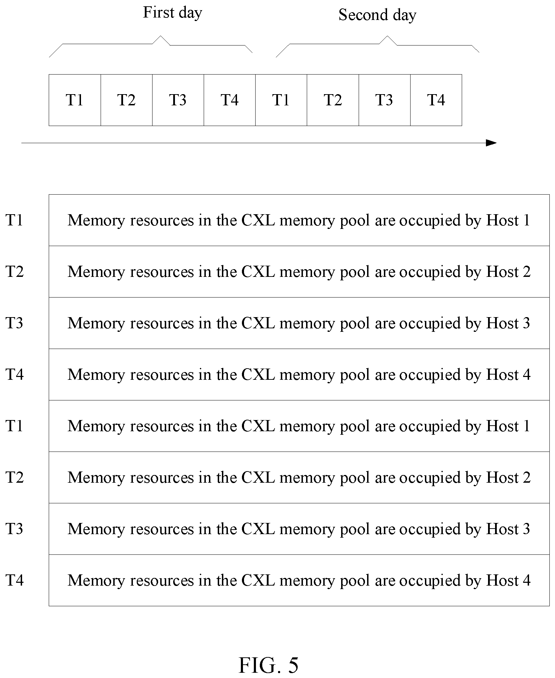

For example, as shown in FIG. 5, assume that the memory usage requests sent by Host 1, Host 2, Host 3, and Host 4 are all accepted on the first day, and their respective VCSs are constructed with reference to the above Block S301 and memory allocation is realized with reference to the above Block S302. Then on the second day, the FM only needs to monitor whether the respective memory usage times have expired and then control the CXL physical switch to perform a switch of different hosts and their corresponding VCSs. In this way, the CXL FM is responsible for managing the allocation of memory resources in the CXL memory pool. The CXL FM monitors the switching between different hosts to ensure that each host may fairly obtain CXL memory expansion resources under limited memory resources. Within each time slice (i.e., memory usage time), the current host may exclusively occupy the entire large CXL memory pool for computation.

The above provides a detailed elaboration on allocating memory resources in the CXL memory pool to the first host at the starting time point of the memory usage time.

As an example, the FM monitors memory usage of the first host and, based on the memory usage, determines whether the memory resources allocated to the first host are released at the end of the memory usage time of the first host. In response to determining being released, memory resources are allocated to a second host, which has scheduled to occupy the next memory usage time. In response to determining not being released, a second indication is sent to the second host; the second indication indicates that the second host cannot be allocated memory resources during the next memory usage time.

By applying this method, the FM monitors the execution status of a task of the first host to determine whether the memory usage time allocated for the host has expired and, in response to determining having expired, determines whether the first host has completed its current task. In response to determining that the task has not been completed, the FM needs to notify the second host that the second host cannot be allocated memory during the next memory usage time. In response to determining that the first host completes its current task before the memory usage time expires, the FM may allocate the idle time to other hosts that have sent memory usage requests.

As an example, after the first host releases the memory resources of the CXL memory pool at the end of the memory usage time, i.e., after the first host has finished the use of the memory resources in the CXL memory pool at the end of the memory usage time, the method further includes: recording attribute information of each memory apparatus in the CXL resource pool to allocate memory resources in the CXL resource pool to the second host based on the attribute information of each memory apparatus. This eliminates the need to re-query the attribute information of each memory apparatus in response to determining allocating memory resources to the second host. In this example, the attribute information of each memory apparatus includes, at least, information such as the capacity and transmission speed of each memory apparatus.

By applying this method, after the memory usage time of the first host ends, the FM saves the context status of the first host, wherein the status refers to the attribute information of each memory apparatus in the aforementioned example, for memory allocation to the second host.

As an example, after the first host has finished the use of the memory resources in the CXL memory pool at the end of the memory usage time, the method further includes: recording a host device memory (HDM) address of the first host, so that in response to allocating memory resources to the first host the next time, the memory resources allocated to the first host and recorded through the HDM address may be directly used.

By applying this method, after the memory usage time of the first host ends, the FM saves the HDM of the first host, so that if the first host uses the CXL memory pool again, the first host may quickly use memory resources based on the HDM.

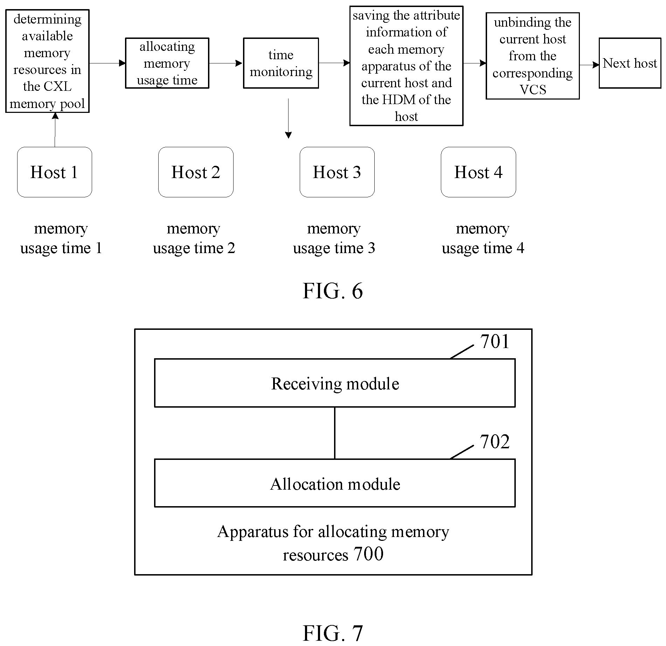

To elaborate on the method provided in the present disclosure in more detail, the following provides a more specific description of the solution provided in the present disclosure with specific examples in conjunction with FIG. 6.

As shown in FIG. 6, the process includes the following steps.
1. A host sends a memory usage request to the FM, with the memory usage request carrying the memory usage time and memory resource demand.
2. In response to determining that the memory usage request is accepted, the FM records the memory usage time of the memory usage request and allocates memory resources from the CXL memory pool to the host.
3. The host uses the memory resources from the CXL memory pool during the memory usage time.
4. The FM monitors the memory usage and task execution status of each host.
5. The FM saves the attribute information of each memory apparatus of the current host and the HDM of the host at the end of the memory usage time.
6. The FM unbinds the current host from the corresponding VCS, and then the next host exclusively occupies the memory resources in the CXL memory pool based on the saved attribute information of the memory apparatuses.

The above describes the method provided in the examples of the present disclosure. Below is the description of the apparatus provided in the examples of the present disclosure.

Refer to FIG. 7, which is a schematic diagram of an apparatus provided in an example of the present disclosure. As shown in FIG. 7, the apparatus is applied to a CXL FM; the apparatus includes a receiving module 701 and an allocating module 702.

The receiving module 701 is to receive a memory usage request sent by a first host, where the memory usage request carries a memory usage time and a memory resource demand; the memory usage time referring to a time period during which the first host requests to use the memory resources in a CXL memory pool; the memory resource demand referring to an amount of the memory resources that the first host demands to use.

The allocating module 702 is to, in response to determining that the memory usage time is not being occupied or is not scheduled by other hosts, and available memory resources in the CXL memory pool meet the memory resource demand, allocate the memory resources in the CXL memory pool to the first host during the memory usage time, so that all the memory resources in the CXL memory pool are available to the first host within the memory usage time.

In this example, a memory usage request sent by the first host is received, wherein the memory usage request carries the memory usage time and the memory resource requirement; in response to determining that the memory usage time is not being occupied or is not scheduled by other hosts, and available memory resources in the CXL memory pool may meet the memory resource requirement, memory resources in the CXL memory pool are allocated to the first host at the start time point of the memory usage time, so that the first host may use memory resources in the CXL memory pool during the memory usage time. In this way, the first host exclusively occupies all memory resources in the CXL memory pool during the memory usage time. Compared with related art, where part of the memory resources in the CXL memory pool may be occupied, sufficient memory resources may be provided in most scenarios, solving the problem of insufficient memory resource allocation.

Furthermore, in this example, different hosts may exclusively occupy all memory resources in the CXL memory pool during different memory usage times, which maximizes the utilization of memory resources in the CXL memory pool, thereby reducing waste caused by vacant memory resources.

As an example, the allocating module is further to:
in response to determining that the memory usage time is currently being occupied or is scheduled by other hosts, or
in response to determining that the memory usage time is not currently being occupied or is not scheduled by other hosts, but the available memory resources in the CXL memory pool are not able to meet the memory resource demand,
send to the first host a first indication indicating a rejection of the memory usage request.

As an example, allocating the memory resources in the CXL memory pool to the first host during the memory usage time includes:
determining whether a virtual connect switch (VCS) corresponding to the first host exists in the CXL memory pool; in response to determining the VCS exists in the CXL memory pool, controlling a CXL physical switch of the CXL memory pool to bind the first host to the VCS in the CXL memory pool that corresponds to the first host, so that the memory resources in the CXL memory pool are allocated to the first host at a start time point of the memory usage time;
in response to determining no VCS in the CXL memory pool corresponding to the first host, constructing a corresponding VCS for the first host in the CXL memory pool, binding the constructed VCS to each CXL apparatus in the CXL memory pool that provides memory resources, and controlling the CXL physical switch to bind the first host to the VCS in the memory pool that corresponds to the first host, so that the memory resources in the CXL memory pool are allocated to the first host at the start time point of the memory usage time.

In one example, binding the constructed VCS to each CXL apparatus in the CXL memory pool that provides memory resources includes:
configuring, through the VCS, a virtual PCIe-to-PCIe (PCIe, peripheral component interconnect express) bridge and connecting the virtual PCIe-to-PCIe bridge to a physical PCIe-to-PCIe bridge of each CXL apparatus in the CXL memory pool that provides memory resources, so that the VCS is bound with each CXL apparatus in the CXL memory pool.

In one example, the apparatus further includes:
a monitoring module, to monitor a memory usage of the first host, and determining whether the memory resources configured for the first host are released at an end time point of the memory usage time based on the memory usage;
in response to determining the memory resources configured for the first host are released at the end time point of the memory usage time, then allocating memory resources to a second host which has scheduled to occupy a next memory usage time after the memory usage time;
in response to determining the memory resources configured for the first host are not released at the end time point of the memory usage time, sending to the second host a second indication, which indicates that no memory resource is to be allocated to the second host during the next memory usage time.

In one example, the apparatus further includes:
a recording module, to record attribute information of each memory apparatus in the CXL resource pool to allocate the memory resources in the CXL resource pool to the second host based on the attribute information of each memory apparatus.

In one example, the recording module is further to:
after determining that the memory usage time is not being occupied or scheduled by other hosts and that the available memory resources in the CXL memory pool may meet the memory resource demand, record the memory usage time locally, so that the allocation module may determine whether the memory usage time carried in a subsequently received memory usage request is being occupied or scheduled for use based on the recorded memory usage time locally.

This completes the structural description of the apparatus shown in FIG. 7.

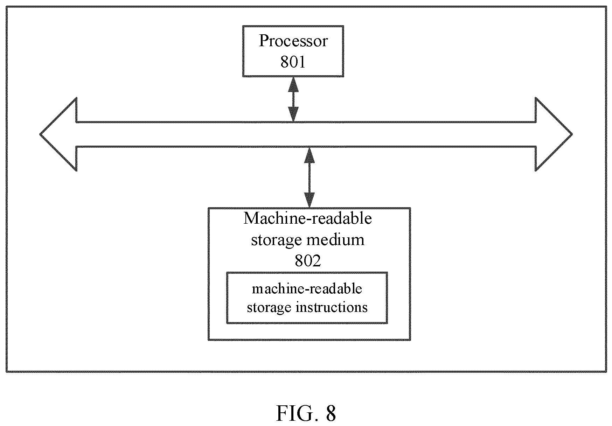

See FIG. 8, which is a schematic diagram of an electronic device provided in an example of the present disclosure. As shown in FIG. 8, the hardware structure may include: a processor 801 and a machine-readable storage medium 802, wherein the machine-readable storage medium stores machine-executable instructions that may be executed by the processor; the processor is to execute the machine-executable instructions to implement the method disclosed in the above examples of the present disclosure.

Based on the same disclosure concept as the above method, an example of the present disclosure further provides a machine-readable storage medium, wherein a number of computer instructions are stored on the machine-readable storage medium, and in response to determining the computer instructions are executed by a processor, the method disclosed in the above examples of the present disclosure may be implemented.

As examples, the above-mentioned machine-readable storage medium may be any electronic, magnetic, optical, or other physical storage apparatus capable of containing or storing information, such as executable instructions, data, etc. For example, the machine-readable storage medium may be RAM (Random Access Memory), volatile memory, nonvolatile memory, flash memory, storage drives (such as hard disk drives), solid-state drives, any type of storage disk (such as optical disks, DVDs, etc.), or similar storage media, or combinations of them.

The above description is only the examples of the present disclosure and is not used to limit the present disclosure. For those skilled in the art, the present disclosure may have various modifications and changes. Any modifications, equivalent substitutions, improvements, etc., made within the spirit and principle of the present disclosure, should be included within the scope of the claims of the present disclosure.

## Claims

1. A method for allocating memory resources, wherein the method is applied to a compute express link, CXL, network manager, and the method comprises:
receiving (S201) a memory usage request sent by a first host, wherein the memory usage request carries a memory usage time and a memory resource demand; the memory usage time referring to a time period during which the first host requests to use the memory resources in a CXL memory pool; the memory resource demand referring to an amount of the memory resources that the first host demands to use;
in response to determining that the memory usage time is not currently being occupied or is not scheduled by other hosts, and available memory resources in the CXL memory pool meet the memory resource demand, then allocating (S202) the memory resources in the CXL memory pool to the first host during the memory usage time, so that all the memory resources in the CXL memory pool are available to the first host within the memory usage time.

2. The method of claim 1, further comprising:
in response to determining that the memory usage time is currently being occupied or is scheduled by other hosts, or
in response to determining that the memory usage time is not currently being occupied or is not scheduled by other hosts, but the available memory resources in the CXL memory pool fail to meet the memory resource demand,
sending to the first host a first indication indicating a rejection of the memory usage request.

3. The method of claim 1, wherein allocating the memory resources in the CXL memory pool to the first host during the memory usage time comprises:
determining (S301) whether a virtual connectivity switch, VCS, corresponding to the first host exists in the CXL memory pool;
in response to determining the VCS exists in the CXL memory pool, controlling (S302) a CXL physical switch of the CXL memory pool to bind the first host to the VCS in the CXL memory pool that corresponds to the first host, so that the memory resources in the CXL memory pool are allocated to the first host at a start time point of the memory usage time;
in response to determining no VCS in the CXL memory pool corresponding to the first host, constructing (S303) a corresponding VCS for the first host in the CXL memory pool, binding the constructed VCS to each CXL apparatus in the CXL memory pool that provides memory resources, and controlling the CXL physical switch to bind the first host to the VCS in the CXL memory pool that corresponds to the first host, so that the memory resources in the CXL memory pool are allocated to the first host at the start time point of the memory usage time.

4. The method of claim 3, wherein binding the constructed VCS to each CXL apparatus in the CXL memory pool that provides memory resources comprises:
configuring, through the VCS, a virtual peripheral component interconnect express, PCIe,-to-PCIe bridge and connecting the virtual PCIe-to-PCIe bridge to a physical PCIe-to-PCIe bridge of each CXL apparatus in the CXL memory pool that provides memory resources, so that the VCS is bound with each CXL apparatus in the CXL memory pool.

5. The method of claim 1, wherein the method further comprises:
monitoring a memory usage of the first host, and determining whether the memory resources configured for the first host are released at an end time point of the memory usage time based on the memory usage;
in response to determining the memory resources configured for the first host are released at the end time point of the memory usage time, allocating memory resources to a second host which has scheduled to occupy a next memory usage time after the memory usage time;
in response to determining the memory resources configured for the first host are not released at the end time point of the memory usage time, sending to the second host a second indication, which indicates that no memory resource is to be allocated to the second host during the next memory usage time.

6. The method of claim 5, wherein after the memory resources configured for the first host are released at the end time point of the memory usage time, the method further comprises:
recording attribute information of each memory apparatus in the CXL resource pool to allocate the memory resources in the CXL resource pool to the second host based on the attribute information of each memory apparatus.

7. An apparatus (700) for allocating memory resources, applied to a compute express link, CXL, network manager, and the apparatus comprises:
a receiving module (701), to receive a memory usage request sent by a first host, wherein the memory usage request carries a memory usage time and a memory resource demand; the memory usage time referring to a time period during which the first host requests to use the memory resources in a CXL memory pool; the memory resource demand referring to an amount of the memory resources that the first host demands to use;
an allocation module (702), to, in response to determining that the memory usage time is not being occupied or is not scheduled by other hosts, and available memory resources in the CXL memory pool meet the memory resource demand, allocate the memory resources in the CXL memory pool to the first host during the memory usage time, so that all the memory resources in the CXL memory pool are available to the first host within the memory usage time.

8. The apparatus of claim 7, wherein the allocation module is further configured to:
in response to determining that the memory usage time is currently being occupied or is scheduled by other hosts, or
in response to determining that the memory usage time is not currently being occupied or is not scheduled by other hosts, but the available memory resources in the CXL memory pool fail to meet the memory resource demand,
then send to the first host a first indication indicating a rejection of the memory usage request.

9. The apparatus of claim 7, wherein allocating the memory resources in the CXL memory pool to the first host comprises:
determining whether a virtual connectivity switch, VCS, corresponding to the first host exists in the CXL memory pool;
in response to determining the VCS exists in the CXL memory pool, controlling a CXL physical switch of the CXL memory pool to bind the first host to the VCS in the CXL memory pool that corresponds to the first host, so that the memory resources in the CXL memory pool are allocated to the first host at a start time point of the memory usage time;
in response to determining no VCS in the CXL memory pool corresponding to the first host, constructing a corresponding VCS for the first host in the CXL memory pool, binding the constructed VCS to each CXL apparatus in the CXL memory pool that provides memory resources, and controlling the CXL physical switch to bind the first host to the VCS in the CXL memory pool that corresponds to the first host, so that the memory resources in the CXL memory pool are allocated to the first host.

10. The apparatus of claim 9, wherein binding the constructed VCS to each CXL apparatus in the CXL memory pool that provides memory resources comprises:
configuring, through the VCS, a virtual peripheral component interconnect express, PCIe,-to-PCIe bridge and connecting the virtual PCIe-to-PCIe bridge to a physical PCIe-to-PCIe bridge of each CXL apparatus in the CXL memory pool that provides memory resources, so that the VCS is bound with each CXL apparatus in the CXL memory pool.

11. An electronic device, comprising:
a processor (801); and
a machine-readable storage medium (802) for storing computer program instructions, wherein the computer program instructions are executed by the processor to implement the method according to any one of claims 1 to 6.

12. A machine-readable storage medium for storing computer program instructions, wherein the computer program instructions are executed by a processor to execute the method according to any one of claims 1 to 6.
